# EUROPEAN PATENT APPLICATION

(11) **EP 2 471 375 A1**
(43) Date of publication of application: **04.07.2012**
(21) Application number: 10197247.9
(22) Date of filing: 29.12.2010
(51) Int. Cl.: A23D 7/005, A23D 7/04, A21D 2/16, A21D 2/26

(54) **USE OF OIL POWDER, OIL FLAKES AND OIL CREAM FOR DOUGH**

(71) Applicant: Nestec S.A., 1800 Vevey (CH)
(72) Inventor: Arfsten, Judith, CH-1752 VILLARS-SUR-GLÂNE (CH); Betz, Rheinhold Willy, D-78244 GOTTMADINGEN (DE); Mezzenga, Raffaele, CH-8053 ZURICH (CH); Ulrich, Stephane, CH-1009 PULLY (CH); Savin, Gabriela, F-14100 LISIEUX (FR); Valles-Pamies, Baltasar, I-52037 SANSEPOLCRO (IT)

(57) **Abstract**

The present invention concerns the use of oil powder , oil flakes solid at room temperature or oil cream comprising at least 90 % weight % of oil as the inner core and a cross linked protein as the outer shell for the preparation of a dough, wherein said oil powder ,oil flakes or oil cream are mixed with the remaining ingredients.

## Description

### Field of the invention

The invention concerns the use of encapsulated oils as well as low SFA bakery doughs prepared with said encapsulated oils as fat replacement systems. The doughs can be used for the preparation of bakery products such as cookies, pies, croissants, puff pastry, wafers, loaves, biscuits, pizza doughs etc.

The dough products related to the invention comprise encapsulated oils, fat, water, flour, optionally eggs, and optionally a leaving agents as main ingredients.

### Background of the invention

The different dough types have in common that the type of fat strongly governs the texture as well as the organoleptic properties of the unbaked as well as the baked product. Bakery doughs are usually prepared with solid-type fats such as lard, butter, margarine, palm based fats, hydrogenated vegetable oils, or high melting stearin fractions of vegetable oils.

The hardness of a fat is linked to its degree of saturation. Highly saturated fats are usually solid at ambient conditions. Low levels of saturation yield a liquid product at ambient conditions, e.g. a sunflower oil.

Solid fats containing high amounts of saturated fatty acids (SFA) are known to have negative health benefits and are linked to an enhanced risk for cardiovascular diseases. In the recent years, this has led to an increasingly negative consumer perception of saturates.

Hydrogenation of oil is a commonly used technique to obtain solid type fats from liquid oils. Besides the resulting high SFA content, the presence of trans fatty acids in partially hydrogenated fats has become a severe health issue. Trans fatty acids are associated with cardiovascular diseases as well as with the risk of getting diabetes and some types of cancer such as breast cancer.

Hence, it would be desirable to replace high SFA solid-type fats or hydrogenated fats containing significant levels of trans fatty acids by low SFA liquid oils. However, for persons skilled in the art it is obvious that in most cases of dough preparation it is not possible to use a liquid oil instead of a solid fat. Besides other technological drawbacks, liquid oil doughs usually display a poor dough texture. The doughs are much softer and stickier resulting in unworkable and unprocessable doughs. Oil release during manufacturing and dough storage occurs.

Thus, there is a high demand for low SFA fats that can replace high SFA solid fats while still providing sufficient dough texture and workability.

Pat. Appl. No. WO94/19953 concerns bakery doughs or batters comprising the conventional ingredients, wherein, however, the fat applied displays a SFA content of less than 40 wt. %. The fats that can be applied are suitably obtained from chemical or emzymic interesterification, optionally followed by fractionation of a hardened fat and / or a liquid oil.

Pat. Appl. No. WO 2008/150169 A1 relates to a method of preparing biscuits or crackers using a fat blend which is characterized by a solid fat content of less than 10 wt. % at 25 °C. The inventors found that despite the high level of unsaturated fatty acids in the fat blend it can suitably be used to prepare a biscuit dough or a cracker dough that does not suffer from stickiness.

In the above mentioned documents SFA reduction is achieved by using a low SFA fat blend usually containing a crystallizing or structuring agent such as a hydrogenated fat or a highly saturated fat fraction.

### Summary of the invention

The present invention discloses a substantially different route to obtain a low SFA lipid based dough. In contrast to approaches of the prior art, the present invention does neither rely on blending different fats or fat fractions nor on crystallizing liquid oils.

We have found that encapsulated liquid vegetable oils can be used to replace (partially or completely) the solid fat in doughs. The resulting dough is characterized by a solid dough texture. The doughs don't display any stickiness and are workable. Their tendency to release oil is strongly reduced compared to a dough prepared with liquid oil. The present invention concerns the use of encapsulated oil obtained by an emulsification process comprising at least 80 % weight % of oil as the inner core and a cross linked protein as the outer shell for the preparation of a dough, wherein said encapsulated oil is mixed with the remaining ingredients.

### Detailed description of the invention

The encapsulated oils are obtained by an emulsion-based encapsulation process known from the prior art. These processes have in common that they are based on an oil in water emulsion that is dried or concentrated to obtain an encapsulated oil. The encapsulated oil is either an oil powder, oil flakes solid at room temperature or oil cream. The drying / concentrating step can be carried out by any commonly known drying /concentrating technique such as air drying, ventilation, spray drying, freeze drying, vacuum drying, microfiltration, centrifugation etc. Prior to the drying /concentrating step a step to crosslink the protein based emulsifier might be included. This might be a physical treatment such as heat treatment or high pressure treatment or a chemical treatment or an enzymatic treatment to crosslink the used protein based emulsifier. The final encapsulated oil usually consists of a liquid vegetable oil that is encapsulated in a matrix material consisting of proteins, and optionally carbohydrates, and optionally further surface active agents, or mixtures thereof. Depending on the employed drying / concentrating step, residual water is present. For example, a spray dried product will commonly have a moisture content < 1 %, whereas a microfiltrated product will have a moisture content of up to 10-50 % . Using a concentrated product with a high moisture content requires the reduction of the equivalent amount of water from the water present in the dough recipe. In each case the encapsulation procedure transfers the liquid oil into a solid state. This might be a powdery state when spray drying is applied or a cream-like texture when microfiltration is applied. Thus, the encapsulation process can be regarded as an oil thickening or oil structuring process.

The oil used for preparing the emulsion might be any vegetable oil or fat that is liquid or that can be liquified at ambient conditions. The oil comprises organic oils (oils produced by plants or animals), in particular food grade oils. Examples are sunflower oil, rapeseed oil, olive oil, soy oil, fish oil, linseed oil,soybean oil, hazelnut oil, flaxseed oil, primrose oil, essential oils, safflower oil, corn oil, algae oil, cottonseed oil, palm oil, palm kernel oil, coconut oil , and combinations thereof. The oil might contain a liposoluble compound, such as for example plant polyphenols, fatty acids, such as n-3 fatty acids, n-6 fatty acids, vitamins, aromas, antioxidants, active ingredients. Preferably, an oil with a low SFA content is chosen such as high oleic sunflower oil or high oleic rapeseed oil.

The emulsifier used is preferably a protein-based emulsifier such as whey proteins, soy proteins, pea proteins, caseinate, egg albumen, lyzozyme, gluten, rice protein, corn protein, potato protein, pea protein, skimmed milk proteins or any kind of globular and random coil proteins as well as combinations thereof. The proteins comprise food grade salts, such as sodium citrate, magnesium citrate, potassium citrate or combinations thereof. Emulsion based processes to obtain encapsulated oils are described in various scientific publications and review articles such as
Mary Ann Augustin, Luz Sanguansri, and Christine M. Olivier, "Functional properties of milk constituents: Application for microencapsulation of oils in spray-dried emulsions - A minireview," 90, 137 (2009).
Adem Gharsallaoui, et al., "Applications of spray-drying in microencapsulation of food ingredients: An overview," Food Research International 40, 1107 (2007).
R. Mezzenga and S. Ulrich, "Spray-Dried Oil Powder with Ultrahigh Oil Content," (2010).
Alexandre I. Romoscanu and Raffaele Mezzanga, "Cross linking and rheological characterization of adsorbed protein layers at the oil-water interface," 21, 9689 (2005).
⁵ Cesar Vega and Y. H. Roos, "Invited Review: Spray-Dried Dairy and Dairy-Like Emulsions-Compositional Considerations," 89, 383 (2006).
Patents disclosing such encapsulated oils or the process of obtaining such encapsulated oils are e.g. EP 1 998 627 B1, EP 2 191 730 A1, US 2010/0074986 A1.

Typical solid fat replacement ratios are between 0.1 % - 100 %, preferably between 15 % and 60 %. Possible replacement ratios strongly depend on the used dough recipe and the desired product functionalities. For higher replacement ratios the doughs might become softer compared to a reference dough prepared with a solid fat. However, even at a 100 % replacement of solid fat by encapsulated oil the dough texture is significantly improved compared to a dough prepared with a liquid oil.

One beneficial feature of the present invention is the flexibility of the approach in terms of ingredients. The present invention is not related to particular fat fractions or crystallizing agents. In the present invention any type of oil with a desired degree of saturation can be used. In doing so, a lipid ingredient with an SFA content as low as that of a high oleic sunflower oil (about 8 % w/w SFA) can be obtained.

According to the invention, in the preparation of the dough, an amount of 0.5 to 40 % of the oil powder, the oil flakes or the oil cream is mixed with the remaining ingredients. The remaining ingredients comprise fat, water and flour. As mentioned above, the replacement of fat by the oil can be between 0.1 and 100 %, preferably between 15 and 60 %. The remaining ingredients can be also egg, leavening agent and sugar. It is also possible to prepare a savory dough : in this case the sugar is replaced by salt, for example in an amount of 0.1 to 10 %.

According to the invention, the oil droplets of the encapsulated oil have an average particle size in the range of about 0.1 to 100 microns. A powder particle or an oil flake is formed by a multiplicity of these oil droplets. For the oil cream, the oil droplets are the droplets in the continuous aqueous phase.
The present invention concerns further a dough produced with the oil powder, oil flakes or oil cream, comprising between 0.5 to 40 % of this ingredient , between 0.5 and 40 % of fat, between 5 and 15 % of water and between 30 and 40 % of flour. In the present specification under dough , we understand any type of dough obtained by a mixture of flour, water and encapsulated oil/fat, with or without any further ingredient. For example that means dough obtained with leavening agent (yeast or with baking powder), like pizza dough, cookie dough, pie, croissant, puff pastry, wafer, loaf, biscuit and any further dough known by the man skilled in the art.
In the dough of the invention, the amount of leavening agent is comprised between 0.1 and 2 %, the amount of egg between 0.1 and 10 % and the amount of sugar between 0.1 and 40 %.
In a preferred embodiment of the invention, the dough comprises from 10 to 20 % of oil powder, oil flakes or oil cream, from 5 to 15 % of fat, from 32 to 37 % of flour and from 8 to 12 % of water. The amount of leavening agent is around 0.5 %, the amount of egg of around 1.5 % and the amount of flour of around 35 %.
The dough of the invention might also contain chocolate pieces, as well as nuts, fruits or any other added food grade components known in the art.

The present invention concerns further the above mentioned oil cream comprising at least 60 % of oil in weight based on the final oil cream, a maximum water content of 40 %, the remaining being the cross linked protein. The type of oil used as well as the protein used are the same as mentioned above.
The present invention concerns further a process for the preparation of an oil cream , wherein an emulsion is prepared by homogenization of oil with a protein, said protein is denaturated and crosslinked by a physical treatment such as heat treatment or high pressure treatment or a chemical treatment or an enzymatic treatment. Preferably, the emulsion is heat treated at around 80 °C during around 10 min. and cooled down and the emulsion is concentrated by microfiltration or centrifugation to a residual water content of up to 40 %.
The invention concerns finally the baked product obtained from the above mentioned dough. Under baked , we understand any type of baking, oven baking , microwave baking or any other type of baking known in the art.

### Examples

In the following examples, short-crust doughs according to the invention are compared with a reference dough (prepared with a solid fat) and with a dough prepared with liquid oil. Functionalities such as the dough texture and the oil leakage behavior are determined.

. Three types of encapsulated oils that are dried /concentrated by different means are used for the preparation of the doughs. The ingredients are based on an oil in water emulsion which is heat treated:

### Emulsion preparation

Sunflower oil is emulsified in an aqueous solution of WPI (whey protein isolate). The final emulsion contains 20 % (w/w) of sunflower oil. The emulsification is carried out with a high pressure homogenizer. The parameters are adapted to reach an oil droplet size between 0.5 microns and 5 microns.

### Thermal crosslinking:

The emulsion undergoes a heat treatment at 80 °C for 10 min to achieve a cross-linking of the protein layer which surrounds the oil droplets in the emulsion. The crosslinked emulsion is cooled down to ambient conditions.

Depending on the deployed drying / concentrating step, the following ingredients are obtained:

### Spray dried oil powder

The emulsion is spray dried in a classical spray dryer device. The following parameters are chosen: atomization by a spraying disc, throughput 10 l/h, inlet temperature 105 °C, outlet temperature 65 °C. The obtained ingredient was a powder with a moisture content of < 1 % (w/w), an oil content of about 95 % (w/w) and a protein content of about 4 % (w/w).

### Freeze dried oil flakes

The emulsion is freeze-dried in a classical freeze dryer. The following parameters are chosen for freeze-drying: Freezing at - 42°C and 0.2 mbar, primary drying up to 0°C at 0.2 mbar, secondary drying up to 20°C down to 0.003 mbar. The obtained ingredient is flaky with a moisture content of < 1 % (w/w), an oil content of about 95 % (w/w) and a protein content of about 4 % (w/w).

### Microfiltrated oil cream

The emulsion is concentrated by a cross-flow microfiltration. The used device has a channel module with seven filter elements with a hydraulic diameter of 6 mm and a pore size of 0.2 µm. The obtained ingredient has a cream-type texture with a moisture content of about 25 % (w/w), an oil content of about 72 % (w/w) and a protein content of about 3 % (w/w).

For further details regarding technology and preparation procedure for the oil powder it is referred to the prior art, (EP 2,191,730 A1).

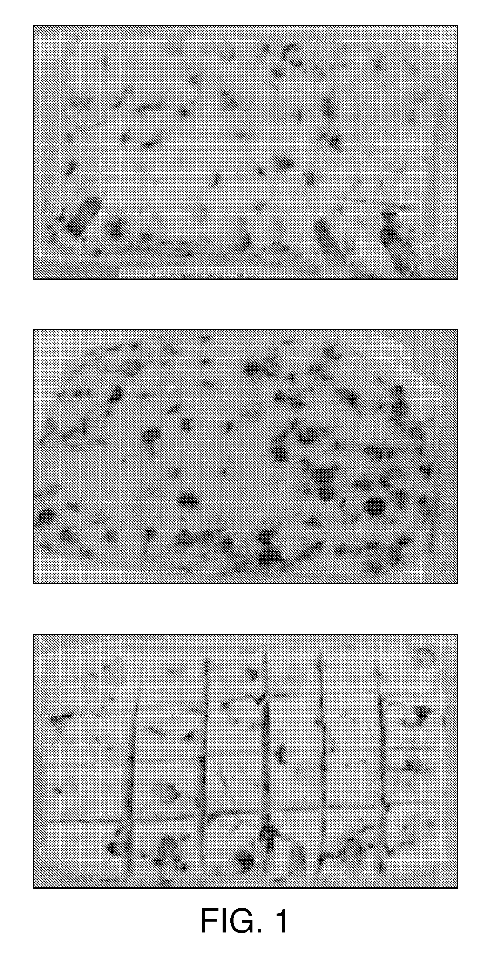

The figure 1 shows a reference short crust dough containing chocolate morsels prepared with solid fat (top), the dough prepared with liquid sunflower oil (center) and the dough with 60 % of the solid fat replaced by spray dried oil powder. The liquid oil dough in the middle doesn't keep its shape. It's very sticky and not workable. The oil powder dough has a similar texture compared to the reference dough (top).

### Dough texture and oil release

### Example 1: Recipe preparation procedure for short crust dough, reference

| | % |
|---|---|
| | (w/w) |
| Water | 8 |
| Baking | 0.5 |
| Powder | |
| Flour | 35 |
| Sugar | 30 |
| Egg Powder | 1.5 |
| Shortening | 25 |

The shortening is creamed with the sugar. After the creaming step all others ingredients are mixed into the dough. Mixing is continued until a homogenous dough is obtained.

### Example 2: Recipe preparation procedure for low SFA liquid oil short crust dough, negative reference, (60 % shortening replacement)

| | % |
|---|---|
| | (w/w) |
| Water | 8 |
| Baking | 0.5 |
| Powder | |
| Flour | 35 |
| Sugar | 30 |
| Egg Powder | 1.5 |
| Shortening | 10 |
| Liquid oil | 15 |

The shortening and the liquid oil are creamed with the sugar. After the creaming step all others ingredients are mixed into the dough. Mixing is continued until a homogenous dough is obtained.

### Example 3: Recipe preparation procedure for low SFA short crust dough using spray dried oil powder (60 % shortening replacement)

| | % |
|---|---|
| | (w/w) |
| Water | 8 |
| Baking | 0.5 |
| Powder | |
| Flour | 35 |
| Sugar | 30 |
| Egg Powder | 1.5 |
| Shortening | 10 |
| Oil powder | 15 |

The shortening and the oil powder are creamed with the sugar. After the creaming step all others ingredients are mixed into the dough. Mixing is continued until a homogenous dough is obtained.

### Example 4: Recipe preparation procedure for low SFA short crust dough using freeze dried oil flakes (60 % shortening replacement)

| | % |
|---|---|
| | (w/w) |
| Water | 8 |
| Baking | 0.5 |
| Powder | |
| Flour | 35 |
| Sugar | 30 |
| Egg Powder | 1.5 |
| Shortening | 10 |
| Oil flakes | 15 |

The shortening and the oil flakes are creamed with the sugar. After the creaming step all others ingredients are mixed into the dough. Mixing is continued until a homogenous dough is obtained.

### Example 5: Recipe preparation procedure for low SFA short crust dough using microfiltrated oil cream (60 % shortening replacement)

| | % |
|---|---|
| | (w/w) |
| Water | 3 |
| Baking | 0.5 |
| Powder | |
| Flour | 35 |
| Sugar | 30 |
| Egg Powder | 1.5 |
| Shortening | 10 |
| Oil cream | 20 |

The shortening and the oil cream are creamed with the sugar. After the creaming step all others ingredients are mixed into the dough. Mixing is continued until a homogenous dough is obtained. The moisture content of the oil cream (of about 25 %) is compensated by a corresponding reduction of the water content in the dough recipe.

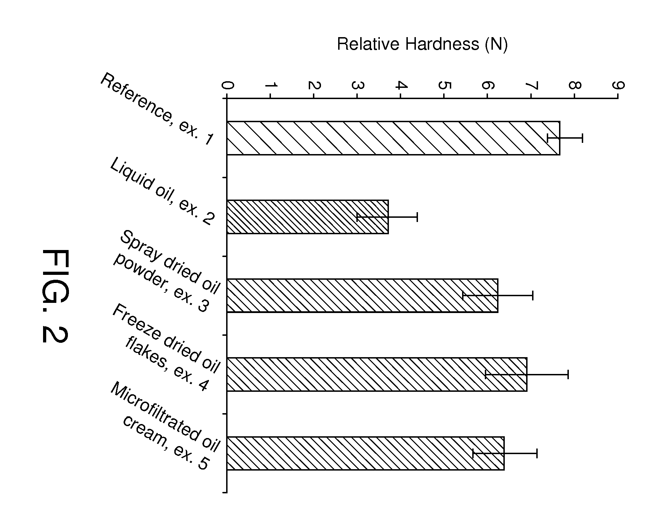

The relative hardness of the dough was measured by the force response upon a displacement controlled compression test on Figure 2. A defined mass and shape of a dough (30 g dough, cylindrically shaped with a diameter of 45 mm and a height of 17 mm) was compressed at 1 mm / s until a compression distance of 7 mm was reached. The obtained maximum force was recorded as a measure of dough hardness. The results show that a liquid oil dough is very soft and sticky. The doughs prepared with the encapsulated oils are still softer than the reference dough. However, they have a clearly improved texture compared to the liquid oil dough without showing any stickyness. Besides the dough texture another important characteristic of a dough is the tendency to release oil. The dough is exposed to a certain level of mechanical stress during the manufacturing process. In certain cases raw doughs have to be stable for a given storage time. This is e.g. a prerequisite for doughs that are sold to the consumer in a raw state. The dough should not be proned to release oil; neither during the manufacturing procedure nor during the storage period.

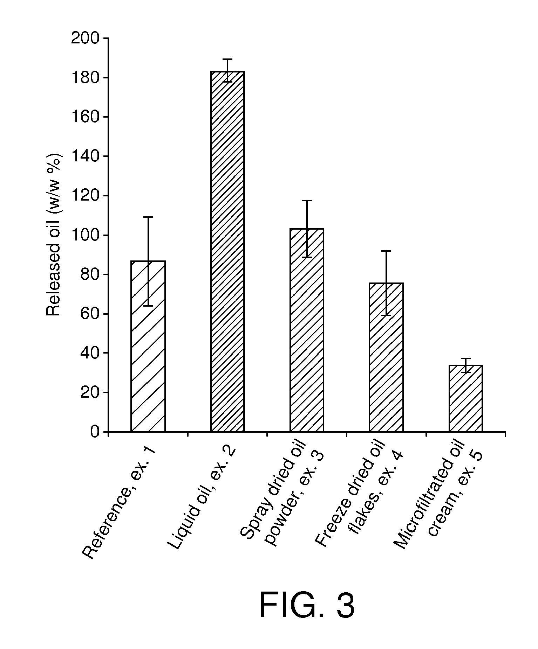

The inventors have observed that the doughs according to this invention are much less proned to oil release than a corresponding liquid oil dough. In order to quantify the oil release tendency of a dough, the amount of released oil upon dough compression was determined (Figure 3). Therefore, a dough compression test as described above was conducted. A cylindrical piece of dough (30 g dough, diameter 45 mm, height 17 mm) was placed on a filter paper. The dough was compressed until a total compression distance of 7 mm was reached. The probe was held at a constant height for a holding time of 120 s. Following, the probe was retracted at 1 mm / s. The amount of oil that was absorbed by the filter was gravimetrically determined. The results depicted in Figure 3 show that even upon a very slight mechanical stress, a liquid oil dough releases oil immediately. The doughs based on the encapsulated oils behave similar compared to a reference dough regarding their oiling out tendency.

## Claims

1. Use of encapsulated oil obtained by an emulsification process comprising at least 80 % weight % of oil as the inner core and a cross linked protein as the outer shell for the preparation of a dough, wherein said encapsulated oil is mixed with the remaining ingredients.

2. Use of encapsulated oil according to claim 1, wherein the encapsulated oil is taken in the group consisting of oil powder, oil flakes solid at room temperature or oil cream.

3. Use according to claim 1 or 2, wherein an amount of 0.5 to 40 % of the oil powder , oil flakes or oil cream is mixed with the remaining ingredients.

4. Use according to any of claims 1 to 3, wherein the remaining ingredients comprise fat, water, flour.

5. Use according to claim 4, wherein the remaining ingredients comprise further egg, leavening agent and sugar.

6. Use according to any of the preceding claims, wherein the oil comprises organic oils (oils produced by plants or animals), in particular food grade oils.

7. Use according to claim 6, wherein the oil is selected from any element in the group consisting of olive oil, safflower oil, sunflower oil, fish oil, soy bean oil, soy oil, palm kernel oil, palm oil, coconut oil, hazelnut oil, flaxseed oil, rapeseed oil, primrose oil, linseed oil, corn oil, alagae oil, cottonseed oil, essential oils, animal oil, mineral oils, organic oil and combinations thereof.

8. Use according to any of the preceding claims, wherein the protein comprises at least one food-grade protein, such as whey protein, caseinate, egg albumen, lyzozyme, soy proteins,gluten, rice proteins, corn proteins, potato proteins, pea proteins, or any kind of globular and random coil proteins or combinations thereof.

9. Use according to any of the preceding claims, wherein the protein comprises food-grade salts, such as sodium citrate, magnesium citrate, potassium citrate, or combinations thereof.

10. Use according to any of the preceding claims, wherein the oil contains at least one liposoluble compound, such as for example plant polyphenols, fatty acids, such as n-3 fatty acids, n-6 fatty acids, vitamins,aromas, antioxidant, active ingredients.

11. Use according to any of the preceding claims, wherein the oil droplets of the encapsulated oil have an average droplet size in the range of about 0,1-100 µm.

12. A dough produced according to any of claims 1 to 11, comprising between 0.5 to 40 % of oil powder , oil flakes or oil cream , between 0.5 and 40 % of fat, between 5 and 15 % of water, between 30 and 40 % of flour.

13. A dough according to claim 12, comprising further from 0.1 to 2 % leavening agent, from 0.1 to 10 % egg and from 0.1 to 40 % of sugar or from 0.1 to 10 % of salt.

14. A dough according to any of claims 12 or 13, comprising 10 to 20 % of oil powder , oil flakes or oil cream , 5 to 15 % of fat, 32 to 37 % of flour and 8 to 12 % of water.

15. A dough according to claim 13, comprising further 0.5 % of leavening agent, 1.5 % of egg and 35 % of flour.

16. A dough according to any of claims 12 to 15, wherein said dough is taken in the group consisting of cookie, pie, croissant, puff pastry, wafer, loaf, biscuit and pizza dough.

17. An oil cream comprising at least 60 % of oil in weight based on the oil cream, a maximum content of water of 40 %, the remaining being the cross linked protein.

18. A process for the preparation of an oil cream according to claim 17, wherein an emulsion is prepared by homogenization of oil with a protein, said emulsion is heat treated at around 80 °C during around 10 min. and cooled down and the emulsion is concentrated by microfiltration or centrifugation to a residual water content of up to 35 %.
